# EUROPEAN PATENT APPLICATION

(11) **EP 3 562 014 A1**
(43) Date of publication of application: **30.10.2019**
(21) Application number: 17883898.3
(22) Date of filing: 03.10.2017
(51) Int. Cl.: H02K 49/10, H02K 49/02

(54) **EDDY CURRENT-TYPE DECELERATION DEVICE**

(30) Priority: 21.12.2016 JP 2016247562
(71) Applicant: Nippon Steel Corporation, Tokyo 1008071 (JP)
(72) Inventor: NOGAMI, Hiroshi, Tokyo 100-8071 (JP); IMANISHI, Kenji, Tokyo 100-8071 (JP); NOGUCHI, Yasutaka, Tokyo 100-8071 (JP); YAMAGUCHI, Hiroyuki, Tokyo 100-8071 (JP); KADOKAWA, Shotaro, Tokyo 100-8071 (JP); FUJITA, Takuya, Tokyo 100-8071 (JP)
(74) Representative: Zimmermann & Partner Patentanwälte mbB
(86) International application number: PCT/JP2017/036037
(87) International publication number: WO 2018/116575

(57) **Abstract**

A retarder includes a rotor (1), a plurality of fins (8), a plurality of permanent magnets (3), a switching mechanism, a first cover (21), a second cover (22), and a cover-switching mechanism. The fins (8) are provided on an outer peripheral surface (1a) of the rotor (1) and inclined with respect to a rotation direction of the rotor (1). The magnets (3) are arranged inside the rotor (1). The switching mechanism switches between a braking state and a non-braking state. The first cover (21) faces an end face (1c) of the rotor (1) and includes a plurality of holes (21a). The second cover (22) protrudes from an outer circumferential edge of the first cover (21) toward a rotor (1) side. The cover-switching mechanism opens the holes (21a) in the braking state and closes the holes (21a) in the non-braking state. The first cover (21) is disposed on a side on which a leading end portion (8a) of each fin (8) is present. The retarder achieves suppressing windage and ensuring a heat dissipation performance.

## Description

### TECHNICAL FIELD

The present invention relates to a retarder that is mounted in a vehicle such as a truck and a bus, as an auxiliary brake. The present invention relates particularly to an eddy current retarder (hereafter, also referred to simply as a "retarder") in which permanent magnets (hereafter, also referred to simply as "magnets") is used to generate braking force.

### BACKGROUND ART

In general, an eddy current retarder includes a cylinder-shaped braking member. The braking member is a rotor that is attached to a rotating shaft of a vehicle. Around the rotating shaft, a plurality of magnets facing an inner peripheral surface of the rotor are arranged. In a gap between the inner peripheral surface of the rotor and the magnets, a plurality of pole pieces are arranged around the rotating shaft. A switching mechanism switches positions of the magnets with respect to the pole pieces, which switches between braking and non-braking.

In braking, magnetic flux from magnets passes through the pole pieces to reach the rotor. That is, a magnetic circuit is formed between the magnets and the rotor. The magnetic circuit generates eddy current on the inner peripheral surface of the rotor rotating together with the rotating shaft. As a result, braking torque acts on the rotor, decreasing a rotational speed of the rotating shaft. In non-braking, in contrast, the magnetic flux from the magnets does not reach the rotor. That is, the magnetic circuit is not formed between the magnets and the rotor. The eddy current is therefore not generated on the inner peripheral surface of the rotor, and the braking torque is not generated, either.

In braking, with the generation of eddy current, the rotor generates heat. As the rotor generates the heat, radiant heat from the rotor heats the magnets. This is because the rotor surrounds the magnets. When the magnets are heated excessively, magnetic force exerted by the magnets is reduced, degrading a performance of the retarder. Hence, a plurality of fins are provided on an outer peripheral surface of the rotor. The fins dissipate the heat generated in the rotor with efficiency.

Now, when a vehicle normally travels, that is, in non-braking, fins rotate together with a rotor. The fins are exposed to the outside, thereby causing resistance that hinders smooth rotation of the rotor (a rotating shaft). Rotational resistance caused by the fins is also called windage. As the windage increases, fuel efficiency decreases. The retarder is required to suppress the windage caused by the fins.

A technique to suppress the windage is disclosed in, for example, Japanese Utility Model Application Publication JPH07-3286 (Patent Literature 1) and Japanese Patent Application Publication JPH05-308770 (Patent Literature 2). In a conventional retarder disclosed in Patent Literature 1, a plurality of covers are disposed such that a rotor provided with fins is covered with the covers from its outer circumference side. Each of the covers is movable in such a manner as to flap up outwardly in a radial direction of the rotor. In non-braking, the fins are covered by the covers. It is thereby possible to reduce the windage caused by the fins. In braking, in contrast, the covers flap up, exposing the fins to the outside. It is thereby possible to ensure a heat dissipation performance of the fins.

In a conventional retarder disclosed in Patent Literature 2, a cylinder-shaped cover is disposed such that a rotor provided with fins is covered with the covers from its outer circumference side. The cover is slidable in a rotating shaft direction. In non-braking, the fins are covered with the cover. It is thereby possible to reduce the windage caused by the fins. In braking, in contrast, the cover is slid to expose the fins to the outside. It is thereby possible to ensure a heat dissipation performance of the fins.

### CITATION LIST

### PATENT LITERATURE

Patent Literature 1: Japanese Utility Model Application Publication JPH07-3286
Patent Literature 2: Japanese Patent Application Publication JPH05-308770

### SUMMARY OF INVENTION

### TECHNICAL PROBLEM

In the conventional retarder disclosed in Patent Literature 1, the entire rotor in the rotating shaft direction is covered by the plurality of covers from its outer circumference side. In addition, the reducer itself expands in the radial direction so as to ensure a range of motion of each cover in the radial direction. In the conventional retarder disclosed in Patent Literature 2, the entire rotor in the rotating shaft direction is covered by the cover from its outer circumference side. In addition, the retarder itself expands in the rotating shaft direction so as to ensure a range of motion of the cover in the rotating shaft direction. That is, the expansion of the conventional retarders themselves raises a problem. This is because a vehicle has a limited space for a retarder.

An objective of the present invention is to provide an eddy current retarder that achieves suppressing the windage and ensuring a heat dissipation performance while curbing the expansion of the retarder itself.

### SOLUTION TO PROBLEM

An eddy current retarder according to an embodiment of the present invention includes a cylinder-shaped rotor, a plurality of fins, a plurality of permanent magnets, a switching mechanism, a disk-shaped first cover, a cylinder-shaped second cover, and a cover-switching mechanism. The rotor is attached to a rotating shaft. The plurality of fins are provided on an outer peripheral surface of the rotor and inclined with respect to a rotation direction of the rotor. The plurality of permanent magnets are arranged around a rotating shaft in such a manner as to face an inner peripheral surface of the rotor with a gap therebetween. The switching mechanism switches between a braking state, where a magnetic circuit is formed between the permanent magnets and the rotor, and a non-braking state, where the magnetic circuit is not formed between the permanent magnets and the rotor. The first cover faces one of two end faces of the rotor with a gap therebetween and includes a plurality of holes. The second cover protrudes from an outer circumferential edge of the first cover toward a rotor side. The cover-switching mechanism opens the holes of the first cover in the braking state and closes the holes of the first cover in the non-braking state. The first cover is disposed on a side on which one of two end portions of each of the fins, whichever precedes in the rotation direction of the rotor, is present.

### ADVANTAGEOUS EFFECTS OF INVENTION

With the eddy current retarder according to an embodiment of the present invention, it is possible to achieve suppressing the windage and ensuring a heat dissipation performance while curbing the expansion of the retarder itself.

### BRIEF DESCRIPTION OF DRAWINGS

FIG. 1 is a perspective view illustrating part of a model of a retarder used in a simulation analysis.
FIG. 2 is a cross-sectional view schematically illustrating a main configuration of a retarder.
FIG. 3 is a plan view of a rotor when viewed from its outer circumference side.
FIG. 4 is a diagram illustrating a result of performing a heat transfer and flow analysis of air using the model illustrated in FIG. 1.
FIG. 5 is a cross-sectional view schematically illustrating a main configuration of a retarder according to an embodiment of the present invention.
FIG. 6A is a front view schematically illustrating a state of the retarder illustrated in FIG. 5 in non-braking.
FIG. 6B is a front view schematically illustrating a state of the retarder illustrated in FIG. 5 in braking.
FIG. 7 is a perspective view illustrating an example of an arrangement of magnets in the retarder illustrated in FIG. 5.
FIG. 8A is a cross-sectional view schematically illustrating a state of the retarder illustrated in FIG. 5 in non-braking.
FIG. 8B is a cross-sectional view schematically illustrating a state of the retarder illustrated in FIG. 5 in braking.
FIG. 9 is a graph illustrating results of evaluation about windage in non-braking.
FIG. 10 is a graph illustrating results of evaluation about heat dissipation performance in braking.

### DESCRIPTION OF EMBODIMENTS

To solve the above problem, the present inventors conducted various experiments and simulation analyses, and conducted intensive studies. Consequently, the following findings were obtained.

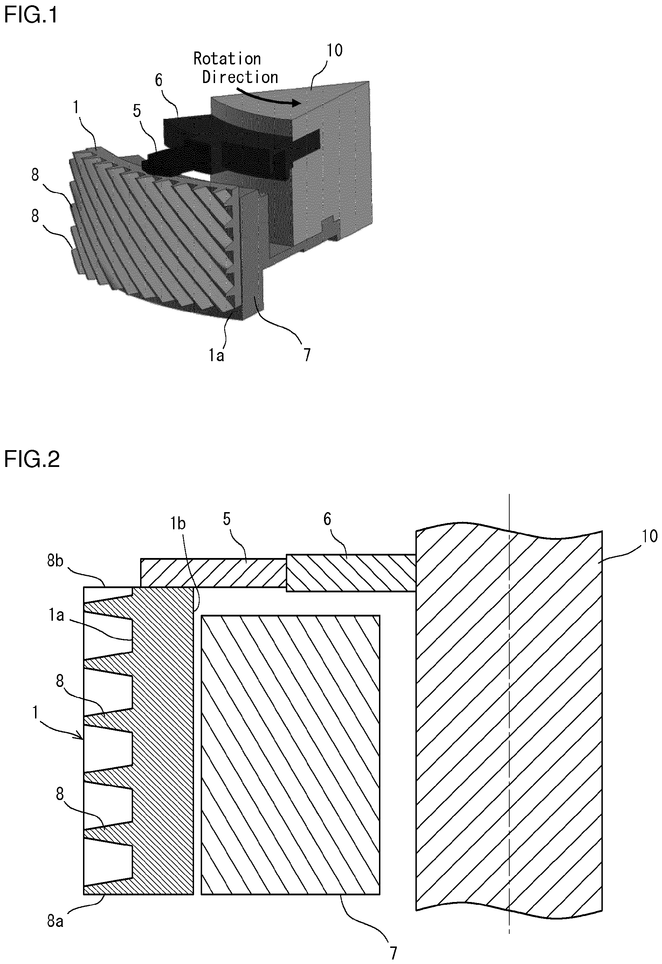

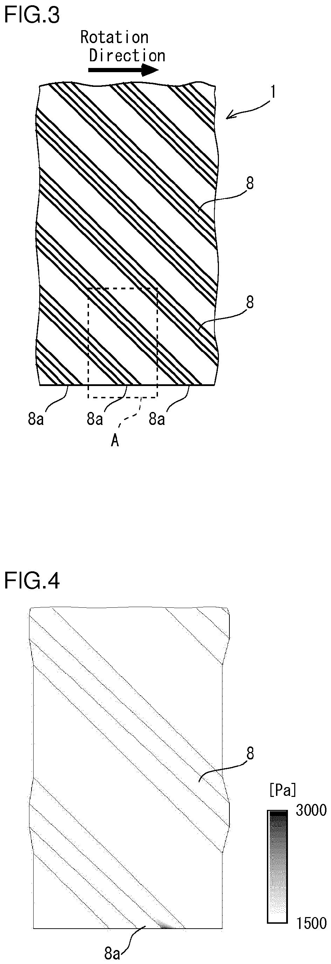

FIG. 1 is a perspective view illustrating part of a model of a retarder used in a simulation analysis. FIG. 2 is a cross-sectional view schematically illustrating a main configuration of a retarder. FIG. 3 is a plan view of a rotor when viewed from its outer circumference side. The cross section illustrated in FIG. 2 is taken along a rotating shaft.

Referring to FIG. 1 to FIG. 3, a cylinder-shaped (drum-shaped) rotor 1 as a braking member is attached to a rotating shaft 10 with an arm 5 and a wheel 6 interposed therebetween, and integrated with the rotating shaft 10. The rotor 1 rotates together with the rotating shaft 10. The rotor 1 may be configured to rotate in one direction. To dissipate heat generated in the rotor 1, a plurality of fins 8 are provided on an outer peripheral surface 1a of the rotor 1. Each fin 8 is inclined with respect to a rotation direction of the rotor 1. With the rotation of the rotor 1, each fin 8 rotates, receiving a pressure from air flow. The pressure received by each fin 8 results in a resistance force against the rotation. It is considered that windage occurs by each fin 8 receiving the pressure from the air flow in such a manner.

FIG. 4 is a diagram illustrating a result of performing a heat transfer and flow analysis of air using the model illustrated in FIG. 1. The result illustrated in FIG. 4 represents a distribution of gas pressure that acts on a zone A illustrated in FIG. 3. Referring to FIG. 3 and FIG. 4, each fin 8 does not receive a pressure that is uniform all over the fin 8.

Of two end portions 8a and 8b of each of the fins 8 in the rotating shaft direction, the end portion 8a that precedes in the rotation direction of the rotor 1 (hereafter, also referred to as a "leading end portion") receives a pressure that is locally high. Therefore, the resistance force against the rotation received by each fin 8 reaches its maximum at the leading end portion 8a of each fin 8. Accordingly, the gas pressure received by the leading end portion 8a of each fin 8 may be reduced in order to suppress the windage effectively in non-braking. That is, a limited zone including the leading end portion 8a of each fin 8 may be covered with a cover.

In addition, the cover may be provided with a plurality of holes, which may be opened in the braking and closed in non-braking. When the holes of the cover are opened in braking, gas (air) is introduced from the outside through the holes to each fin 8, which ensures a heat dissipation performance of the fins 8.

The present invention is completed based on the findings described above.

An eddy current retarder according to an embodiment of the present invention includes a cylinder-shaped rotor, a plurality of fins, a plurality of permanent magnets, a switching mechanism, a disk-shaped first cover, a cylinder-shaped second cover, and a cover-switching mechanism. The rotor is attached to a rotating shaft. The plurality of fins are provided on an outer peripheral surface of the rotor and inclined with respect to a rotation direction of the rotor. The plurality of permanent magnets are arranged around a rotating shaft in such a manner as to face an inner peripheral surface of the rotor with a gap therebetween. The switching mechanism switches between a braking state, where a magnetic circuit is formed between the permanent magnets and the rotor, and a non-braking state, where the magnetic circuit is not formed between the permanent magnets and the rotor. The first cover faces one of two end faces of the rotor with a gap therebetween and includes a plurality of holes. The second cover protrudes from an outer circumferential edge of the first cover toward a rotor side. The cover-switching mechanism opens the holes of the first cover in the braking state and closes the holes of the first cover in the non-braking state. The first cover is disposed on a side on which one of two end portions of each of the fins, whichever precedes in the rotation direction of the rotor, is present.

In the retarder according to the present embodiment, in non-braking, the limited zone in a vicinity of the leading end portion of each fin is covered with the first and second covers, and the holes of the first cover are closed. This reduces gas (air) that is introduced to the leading end portion of each fin. The gas pressure received by the leading end portion of each fin can therefore be reduced. As a result, the windage caused by the fins can be suppressed. In contrast, in braking, the holes of the first cover are opened. This introduces gas (air) through the holes from the outside to each fin. As a result, the heat dissipation performance of the fins can be ensured.

In addition, in the retarder according to the present embodiment, the first and second covers do not cover the entire rotor in the rotating shaft direction from an outer circumference side of the rotor. The first and second covers are not movable. Expansion of the retarder itself is therefore curbed.

A number of the holes provided in the first cover is not limited as long as the number is more than one. It is noted that a role of the holes is to introduce air to each fin from the outside in braking. It is therefore preferable that a total area of the holes is large while a total length of edge portions (a total sum of perimeter lengths) of the holes is short. This is because a long total length of the edge portions of the holes increases an influence of resistance received by the edge portions when the air is introduced, which reduces an amount of the introduced air relatively when the total area of the holes is assumed to be unchanged. Considering a single hole with a constant area, a shape of the hole that minimizes an edge length of the hole is a circle. Accordingly, practical shapes of the holes are circular. To increase the total area of the holes, the shapes of the holes may however be made regular, such as elliptic shapes, triangular shapes, and rectangular shapes, or may be made irregular. In addition, positions of the holes are not limited to particular positions. However, considering the role of the holes, the positions of the holes are preferably located close to the leading end portion of each fin.

In the retarder according to the present embodiment, when a length of the rotor in the rotating shaft direction is denoted by W and a length of a zone where the rotor overlaps the second cover in the rotating shaft direction is denoted by L, it is preferable that a ratio of the length L to the length W, L/W, is more than 0% and 16% or less. When the ratio L/W becomes more than 0%, it is possible to reduce the windage more than a rotor without the first and second covers. To reduce the windage more effectively, the ratio L/W is preferably 6% or more. In contrast, when the ratio L/W is 16% or less, it is possible to ensure the heat dissipation performance as much as the rotor without the first and second covers. The ratio L/W is more preferably 14% or less. The ratio L/W is still more preferably 12% or less.

In a typical example, the cover-switching mechanism includes a plate-shaped member that is adjacent to the first cover and rotatable about the rotating shaft. The plate-shaped member is rotated with respect to the first cover to switch between a state where the plate-shaped member opens the holes of the first cover and a state where the plate-shaped member closes the holes of the first cover. In this case, the plate-shaped member may be provided with, for example, openings such that the openings correspond to positions of the holes of the first cover. Shapes of the openings are not limited as long as the shapes are larger than the corresponding holes.

In a typical example, the cover-switching mechanism includes, in addition to the plate-shaped member, a fluid pressure cylinder that is connected to the plate-shaped member. An action of the fluid pressure cylinder causes the plate-shaped member to rotate with respect to the first cover. This rotation switches between the state where the plate-shaped member opens the holes of the first cover and the state where the plate-shaped member closes the holes of the first cover. The fluid pressure cylinder is an air cylinder, a hydraulic cylinder, or the like.

In a typical example, the retarder includes a plurality of pole pieces, a magnet retention ring, and a housing. The plurality of pole pieces are provided in a gap between the rotor and the permanent magnets and arranged around the rotating shaft. The magnet retention ring retains the permanent magnets. The housing supports the magnet retention ring in such a manner that the magnet retention ring is rotatable around the rotating shaft, and retains the pole pieces. The switching mechanism includes a fluid pressure cylinder that is connected to the magnet retention ring. An action of the fluid pressure cylinder causes the magnet retention ring to rotate with respect to the pole pieces, and then positions of the permanent magnets with respect to the pole pieces are switched. The fluid pressure cylinder is an air cylinder, a hydraulic cylinder, or the like.

In the above typical examples, the fluid pressure cylinder of the cover-switching mechanism can serve as the fluid pressure cylinder of the switching mechanism. Specifically, the fluid pressure cylinder of the switching mechanism is also connected to the plate-shaped member of the cover-switching mechanism. In this case, an action of the fluid pressure cylinder causes the magnet retention ring to rotate with respect to the pole pieces and causes the plate-shaped member to rotate with respect to the first cover. This switches the positions of the permanent magnets with respect to the pole pieces and switches between the state where the plate-shaped member opens the holes of the first cover and the state where the plate-shaped member closes the holes of the first cover. Such a configuration is useful for reduction of a number of components and useful for making control of the switching easy.

Hereafter, an embodiment of an eddy current retarder according to the present invention will be described in detail.

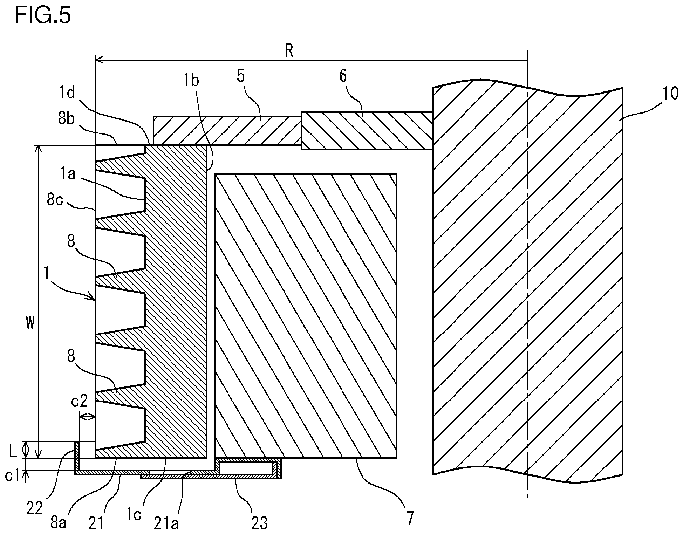

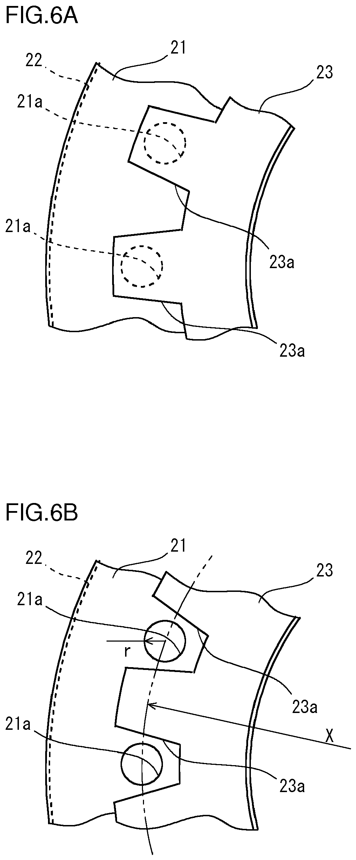

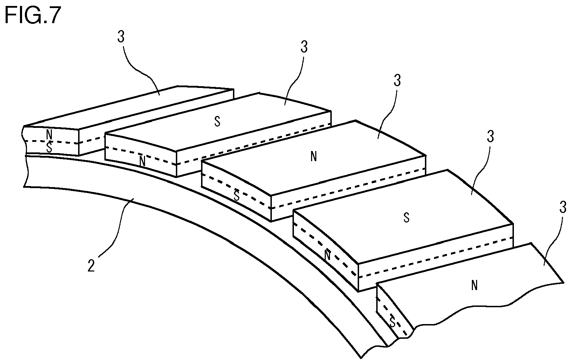

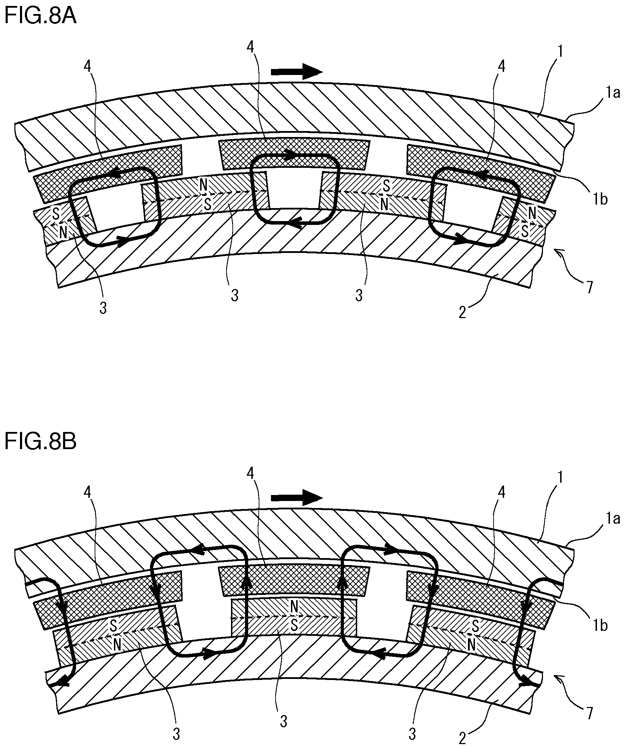

FIG. 5 is a cross-sectional view schematically illustrating a main configuration of a retarder according to an embodiment of the present invention. FIG. 6A is a front view schematically illustrating a state of the retarder in non-braking. FIG. 6B is a front view schematically illustrating a state of the retarder in braking. FIG. 7 is a perspective view illustrating an example of arrangement of magnets in the retarder. FIG. 8A is a cross-sectional view schematically illustrating a state of the retarder in non-braking. FIG. 8B is a cross-sectional view schematically illustrating a state of the retarder in braking. The cross section illustrated in FIG. 5 is taken along a rotating shaft. The cross sections illustrated in FIG. 8A and FIG. 8B are taken orthogonal to the rotating shaft.

Referring to FIG. 5 to FIG. 8B, the retarder includes a cylinder-shaped rotor 1 and a stator 7 that is disposed inside the rotor 1. The rotor 1 is equivalent to a braking member to which a braking torque is applied. The rotor 1 is fixed to a rotating shaft 10 (e.g., propeller shaft, drive shaft, etc.) of a vehicle with an arm 5 and a wheel 6 interposed therebetween. This causes the rotor 1 to rotate together with the rotating shaft 10. On an outer peripheral surface 1a of the rotor 1, a plurality of fins 8 are provided. Each fin 8 is inclined with respect to a rotation direction of the rotor 1 by a predetermined angle (e.g., within a range of 30° to 60°) (see FIG. 3). A role of the fins 8 is to dissipate heat generated in the rotor 1.

The stator 7 includes a plurality of permanent magnets 3, cylinder-shaped magnet retention ring 2, a plurality of pole pieces 4, and a housing that is not illustrated. The magnet retention ring 2 is arranged concentrically with the rotor 1. The magnet retention ring 2 is supported by the housing such as to be rotatable around the rotating shaft 10. The housing is fixed to a non-rotating part (e.g., transmission cover), not illustrated, of a vehicle.

On an outer circumference of the magnet retention ring 2, the plurality of permanent magnets 3 are fixed. The permanent magnets 3 face an inner peripheral surface 1b of the rotor 1 with a gap therebetween and are arranged around the rotating shaft 10. Disposition of poles (N pole and S pole) of each magnet 3 is in a radial direction originated from the rotating shaft 10. Magnets 3 adjacent to each other alternate between different dispositions of poles (see FIG. 7).

In the gap between the inner peripheral surface 1b of the rotor 1 and the magnets 3, the plurality of pole pieces 4, which are made of a ferromagnetic substance, are disposed. The pole pieces 4 are arranged around the rotating shaft 10. An arrangement angle of the pole pieces 4 about the rotating shaft 10 matches an arrangement angle of the magnets 3 about the rotating shaft 10 (see FIG. 8A and FIG. 8B). In each pole pieces 4, its lateral portions are held by the housing.

From the magnet retention ring 2, a lever, not illustrated, protrudes in parallel to the rotating shaft 10. To the lever, a piston rod of an air cylinder is connected via a mechanical linkage that is not illustrated. The air cylinder is equivalent to the fluid pressure cylinder. The air cylinder is fixed to the housing.

Under instructions from a control unit that is not illustrated, the air cylinder acts on compressed air as motive power. An action of air cylinder causes the piston rod to advance or retract. As the piston rod advances or retracts, the magnet retention ring 2 rotates, and the positions of the magnet 3 with respect to the pole pieces 4 are switched. This switches between the braking state and the non-braking state.

Referring to FIG. 5, FIG. 6A, and FIG. 6B, the rotor 1 includes two end faces 1c and 1d. In the following description, an end face 1c on a side on which a leading end portion 8a of a fin 8 is present will be referred to also as a first end face. Another end face 1d will be referred to also as a second end face. A disk-shaped first cover 21 is disposed such as to face the first end face 1c of the rotor 1 with a gap c1 therebetween. The first cover 21 is fixed to the housing. The first cover 21 is provided with a plurality of holes 21a. The plurality of circular holes 21a are disposed on a circumference of a single circle at regular intervals.

From an outer circumferential edge of the first cover 21, a cylinder-shaped second cover 22 protrudes toward a rotor side. The first cover 21 and the second cover 22 form a single piece. Between the second cover 22 and top faces 8c of the fins 8, a gap c2 is provided. When a length of the rotor 1 in a rotating shaft 10 direction (hereafter, referred to also as an "overall rotor length") is denoted by W and a length in the rotating shaft direction of a zone where the rotor 1 overlaps the second cover 22 (hereafter, referred to also as a "second cover overlapping length") is denoted by L, a ratio of the second cover overlapping length to the overall rotor length W, L/W, is more than 0% and 16% or less.

In the present embodiment a limited zone in a vicinity of the leading end portion 8a of each fin 8 is covered with the first cover 21 and the second cover 22.

A plate-shaped member 23 is disposed to be adjacent to the first cover 21. The plate-shaped member 23 is supported such as to be rotatable about the rotating shaft 10 with respect to the first cover 21. The plate-shaped member 23 is provided with a plurality of notches 23a in such a manner that the notches 23a correspond to positions of the holes 21a of the first cover 21. The notches 23a are equivalent to openings. A size of each of the notches 23a is larger than a size of each of the holes 21a.

From the plate-shaped member 23, a lever, not illustrated, protrudes in parallel to the rotating shaft 10. To the lever, the piston rod of the air cylinder described above is connected via a mechanical linkage that is not illustrated. That is, the magnet retention ring 2 and the plate-shaped member 23 are connected to the same air cylinder.

An action of air cylinder causes the piston rod to advance or retract. By the piston rod advancing or retracting, the plate-shaped member 23 rotates with respect to the first cover 21, by which relative positions between the holes 21a and the notches 23a are switched. This switches between a state where the plate-shaped member 23 opens the holes 21a of the first cover 21 and a state where the plate-shaped member 23 closes the holes 21a of the first cover 21.

In non-braking, the pole pieces 4 each overlap adjacent magnets 3 evenly, as illustrated in FIG. 8A. In this state, no braking torque is generated.

In non-braking, magnetic flux from the magnets 3 is in the following conditions. Referring to FIG. 8A, magnetic flux flowing from an N pole of one of adjacent magnets 3 passes through a pole piece 4 and thereafter reaches an S pole of the other of the magnets 3. Magnetic flux flowing from an N pole of the other magnet 3 passes through the magnet retention ring 2 and thereafter reaches an S pole of the one magnet 3. That is, no magnetic circuit is formed between the magnets 3 and the rotor 1. Therefore, no braking torque is generated in the rotor 1 rotating together with the rotating shaft 10.

In non-braking, the plate-shaped member 23 closes the holes 21a of the first cover 21, as illustrated in FIG. 6A. The first cover 21 and the second cover 22 then obstruct introduction of air to the leading end portion 8a of each fin 8. This reduces air that is introduced to the leading end portion 8a of each fin 8. The gas pressure received by the leading end portion 8a of each fin 8 can therefore be reduced. As a result, windage caused by the fins 8 can be suppressed.

In contrast, in braking, the magnet retention ring 2 rotates from the state of non-braking by half the arrangement angle of the magnets 3, as illustrated in FIG. 8B. In this case, the pole pieces 4 are superposed completely on the magnets 3, respectively.

In braking, magnetic flux from the magnets 3 is in the following conditions. Referring to FIG. 8B, magnetic flux flowing from an N pole of one of adjacent magnets 3 penetrates a pole piece 4 and reaches the rotor 1. The magnetic flux having reached the rotor 1 passes through another pole piece 4 and reaches an S pole of the other of the magnets 3. Magnetic flux flowing from an N pole of the other magnet 3 passes through the magnet retention ring 2 and thereafter reaches an S pole of the one magnet 3. That is, a magnetic circuit passing through magnets 3 that are adjacent to each other in a circumferential direction, the magnet retention ring 2, the pole pieces 4, and the rotor 1 is formed by the magnets 3. Magnetic circuits formed in such a manner are formed across the rotor 1 in the circumferential direction, with their directions of magnetic flux alternated. In this case, an eddy current is generated on the inner peripheral surface of the rotor 1. This causes a braking torque, a direction of which is opposite to the rotation direction, to be generated in the rotor 1 rotating together with the rotating shaft 10. In addition, the rotor 1 generates heat.

In braking, the plate-shaped member 23 rotates from the state of non-braking, as illustrated in FIG. 6B. This brings about a state where the notches 23a of the plate-shaped member 23 coincide with the holes 21a of the first cover 21, opening the holes 21a. This introduces air through the holes 21a from the outside to each fin 8. As a result, the heat dissipation performance of the fins 8 can be ensured. The heat generated in the rotor 1 is dissipated to the outside from each fin 8.

### EXAMPLES

To confirm effects brought by the retarder in the present embodiment, heat transfer and flow analysis was conducted.

### [Test Conditions]

An analysis model of the retarder that includes the first and second covers illustrated in FIG. 5 to FIG. 8B was fabricated. In the analysis, the second cover overlapping length L was changed variously. As Comparative Example 1, making assumptions about a typical retarder, the first and second covers were omitted. As Comparative Example 2, making assumptions about the retarders described in Patent Literatures 1 and 2, the second cover overlapping length L was set such that the ratio L/W of the second cover overlapping length L to the overall rotor length W is 50%.

Properties used in the analysis were as follows.
- Rotational speed of the rotor: 3000 rpm
- Overall rotor length W: 1.000
- Outer circumference radius R of the rotor including the fins: 2.552
- Gap c1 between the first cover and the first end face of the rotor: 0.058
- Gap c2 between the second cover and the top face of each fin: 0.058
- Radius r of the holes of the first cover: 0.081
- Distance X from an axial centerline of the rotating shaft to centers of the holes of the first cover: 2.344
- Number of the holes of the first cover: 40

Here, numeric values of the properties W, R, c1, c2, r, and X without units represent ratios with respect to the overall rotor length W as a reference 1.000.

### [Evaluation Method]

A windage caused by the fins in non-braking and a heat dissipation performance of the fins in braking were evaluated. To evaluate the windage, a resistive torque that is generated in the rotor caused by all of the fins receiving a pressure from air flow was calculated. A lower resistive torque means a more excellent suppression of the windage. Comparing resistive torques therefore enables the evaluation of the windage. In an analysis to evaluate the windage, making assumptions about the state of non-braking, the holes of the first cover were closed.

To evaluate the heat dissipation performance, an averaged heat transfer coefficient of surfaces of the rotor exposed on an outer circumference side (outer peripheral surfaces of all of the fins and the rotor) was calculated. Here, a product value of the averaged heat transfer coefficient of the exposed surfaces and a total area of the exposed surfaces represents an amount of heat dissipation from the exposed surfaces. A larger amount of heat dissipation means a more excellent heat dissipation performance. In this analysis, a larger amount of heat dissipation means a more excellent heat dissipation performance because the total area of the exposed surfaces is uniform. Accordingly, comparing averaged heat transfer coefficients enables the evaluation of the heat dissipation performance. In an analysis to evaluate the heat dissipation performance, making assumptions about the state of braking, the holes of the first cover were opened.

### [Results]

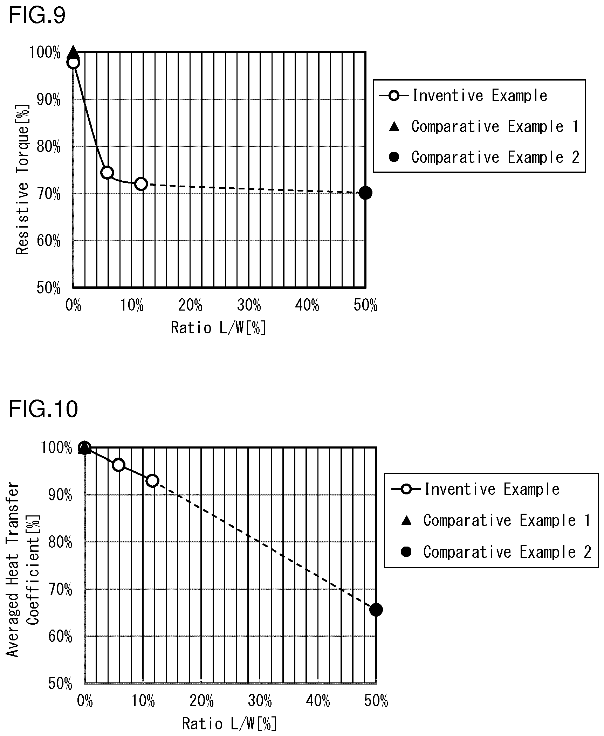

FIG. 9 is a graph illustrating results of evaluation about windage in non-braking. FIG. 10 is a graph illustrating results of evaluation about heat dissipation performance in braking. In FIG. 9, an abscissa represents the ratio L/W of the second cover overlapping length L to the overall rotor length W. An ordinate represents the resistive torque serving as an index of the windage. Numeric values of the resistive torques on the ordinate represent percentages (%) to a resistive torque of Comparative Example 1 (without the first and second covers). In FIG. 10, an abscissa represents the ratio L/W of the second cover overlapping length L to the overall rotor length W, as in FIG. 9. An ordinate represents the averaged heat transfer coefficient serving as an index of the heat dissipation performance. Numeric values of the averaged heat transfer coefficient on the ordinate in FIG. 10 represent percentages (%) to an averaged heat transfer coefficient of Comparative Example 1 (without the first and second covers).

As illustrated in FIG. 9, the windage steeply decreased until the ratio L/W increases up to about 6%. As the ratio L/W further increases, however, little decrease in the windage could be recognized. From these results, it was found that the windage caused by the fins can be suppressed by covering the zone in the vicinity of the leading end portion of each fin with the first and second covers. Consequently, when the ratio L/W is more than 0%, preferably 6% or more, the windage caused by the fins can be suppressed.

In contrast, as illustrated in FIG. 10, it was found that the heat dissipation performance decreases almost monotonously as the ratio L/W increases. In particular, when the ratio L/W is 16% or less, deterioration in the heat dissipation performance could be curbed within 10%. Consequently, when the ratio L/W is 16% or less, preferably 14% or less, more preferably 12% or less, the heat dissipation performance can be ensured.

It should be appreciated that the present invention is not limited to the embodiment described above, and various modifications may be made without departing from the gist and scope of the present invention.

### INDUSTRIAL APPLICABILITY

The present invention is useful to an eddy current retarder using permanent magnets.

### REFERENCE SIGNS LIST

- 1: Rotor
- 1a: Outer peripheral surface of rotor
- 1b: Inner peripheral surface of rotor
- 1c: End face of rotor (first end face)
- 1d: End face of rotor (second end face)
- 2: Magnet retention ring
- 3: Permanent magnet
- 4: Pole piece
- 5: Arm
- 6: Wheel
- 7: Stator
- 8: Fin
- 8a: End portion of fin (leading end portion)
- 8b: End portion of fin
- 8c: Top face of fin
- 10: Rotating shaft
- 21: First cover
- 21a: Hole
- 22: Second cover
- 23: Plate-shaped member
- 23a: Notch

## Claims

1. An eddy current retarder comprising:
a cylinder-shaped rotor that is attached to a rotating shaft;
a plurality of fins that are provided on an outer peripheral surface of the rotor and inclined with respect to a rotation direction of the rotor;
a plurality of permanent magnets that are arranged around the rotating shaft in such a manner as to face an inner peripheral surface of the rotor with a gap therebetween;
a switching mechanism that switches between a braking state, where a magnetic circuit is formed between the permanent magnets and the rotor, and a non-braking state, where the magnetic circuit is not formed between the permanent magnets and the rotor;
a disk-shaped first cover that faces one of two end faces of the rotor with a gap therebetween and includes a plurality of holes;
a cylinder-shaped second cover that protrudes from an outer circumferential edge of the first cover toward a rotor side; and
a cover-switching mechanism that opens the holes of the first cover in the braking state and closes the holes of the first cover in the non-braking state, wherein
the first cover is disposed on a side on which one of two end portions of each of the fins, whichever precedes in the rotation direction of the rotor, is present.

2. The eddy current retarder according to claim 1, wherein when a length of the rotor in a direction of the rotating shaft is denoted by W and a length of a zone in the direction of the rotating shaft where the rotor overlaps the second cover is denoted by L, a ratio of the length L to the length W, L/W, is more than 0% and 16% or less.

3. The eddy current retarder according to claim 2, wherein the ratio L/W is 6% or more.

4. The eddy current retarder according to any one of claims 1 to 3, wherein
the cover-switching mechanism includes a plate-shaped member that is adjacent to the first cover and rotatable about the rotating shaft, and
the plate-shaped member is rotated with respect to the first cover to switch between a state where the plate-shaped member opens the holes of the first cover and a state where the plate-shaped member closes the holes of the first cover.

5. The eddy current retarder according to claim 4, wherein
the cover-switching mechanism further includes a fluid pressure cylinder that is connected to the plate-shaped member, and
an action of the fluid pressure cylinder causes the plate-shaped member to rotate with respect to the first cover, so as to switch between the state where the plate-shaped member opens the holes of the first cover and the state where the plate-shaped member closes the holes of the first cover.

6. The eddy current retarder according to any one of claims 1 to 3, wherein
the retarder includes:
a plurality of pole pieces that are provided in a gap between the rotor and the permanent magnets and arranged around the rotating shaft;
a magnet retention ring that retains the permanent magnets; and
a housing that supports the magnet retention ring in such a manner that the magnet retention ring is rotatable around the rotating shaft, and retains the pole pieces, wherein
the switching mechanism includes a fluid pressure cylinder that is connected to the magnet retention ring, and
an action of the fluid pressure cylinder causes the magnet retention ring to rotate with respect to the pole pieces, and then positions of the permanent magnets with respect to the pole pieces are switched.

7. The eddy current retarder according to any one of claims 1 to 3, wherein
the retarder includes:
a plurality of pole pieces that are provided in a gap between the rotor and the permanent magnets and arranged around the rotating shaft;
a magnet retention ring that retains the permanent magnets; and
a housing that supports the magnet retention ring in such a manner that the magnet retention ring is rotatable around the rotating shaft, and retains the pole pieces, wherein
the switching mechanism includes a fluid pressure cylinder that is connected to the magnet retention ring,
the cover-switching mechanism includes a plate-shaped member that is adjacent to the first cover and rotatable about the rotating shaft,
the fluid pressure cylinder is connected to the plate-shaped member, and
an action of the fluid pressure cylinder causes the magnet retention ring to rotate with respect to the pole pieces and causes the plate-shaped member to rotate with respect to the first cover, so as to switch the positions of the permanent magnets with respect to the pole pieces and switch between a state where the plate-shaped member opens the holes of the first cover and a state where the plate-shaped member closes the holes of the first cover.
